# EUROPÄISCHE PATENTSCHRIFT

(11) **EP 1 340 632 B1**
(45) Veröffentlichungstag und Bekanntmachung des Hinweises auf die Patenterteilung: **26.04.2006**
(21) Anmeldenummer: 03003795.6
(22) Anmeldetag: 20.02.2003
(51) Int. Cl.: B60G 15/14

(54) **Feder-Dämpfereinheit für luftgefederte Fahrzeugachsen**
Spring-damper unit for air spring-supported vehicle axles
Unité ressort-amortisseur pour essieux de véhicule suspendus pneumatiquement

(30) Priorität: 01.03.2002 DE 10209113
(43) Veröffentlichungstag der Anmeldung: 03.09.2003
(73) Patentinhaber: BPW Bergische Achsen Kommanditgesellschaft, 51674 Wiehl (DE)
(72) Erfinder: Berghaus, Roland, 51789 Lindlar (DE); Michels, Burchard, 53804 Much (DE); Rhein, Bernd, 51491 Overath (DE); Memmel, Georg, 97422 Schweinfurt (DE); Kolb, Wolfgang, 97440 Werneck/Ettleben (DE)
(74) Vertreter: Christophersen & Partner

(56) Entgegenhaltungen:
- EP-A- 0 561 394
- WO-A-95/09092
- DE-A- 4 327 909
- DE-A- 19 959 839
- DE-U- 9 305 390

## Beschreibung

Die Erfindung betrifft eine Feder-Dämpfereinheit für luftgefederte Fahrzeugachsen mit einer sich einerseits gegenüber dem Fahrzeugrahmen und andererseits gegenüber der Fahrzeugachse oder einem die Fahrzeugachse führenden Längslenker abstützenden Rollbalg-Luftfeder, deren Rollbalg längslenkerseitig druckdicht an einem Stützelement befestigt ist, und mit einem auf der Längsachse der Luftfeder angeordneten Schwingungsdämpfer, der sich mit seiner Kolbenstange gegenüber dem Fahrzeugrahmen, und mit seinem Kolbenzylinder über ein Gelenk gegenüber dem Längslenker abstützt, wobei der Schwingungsdämpfer das Stützelement sowie eine Mantelfläche durchragt, an der der Rollbalg während des Ein- und Ausfederns abrollen kann.

Eine Feder-Dämpfereinheit mit diesen Merkmalen ist aus der DE 199 59 839 A1 bekannt. Sie besteht zunächst aus einer Rollbalg-Luftfeder, die in an sich bekannter Weise über einen Tauchkolben, an dem der Rollbalg abrollen kann, an einem die Fahrzeugachse führenden Fahrwerktsteil, und über einen oberen Abschlußdeckel an dem Fahrzeugrahmen befestigt ist. Die Besonderheit bei der Feder-Dämpfereinheit nach der DE 199 49 839 A1 besteht darin, daß in die weitgehend konventionell aufgebaute Luftfeder ein Schwingungsdämpfer baulich integriert ist. Hierbei befindet sich der Kolbenzylinder des Schwingungsdämpfers größtenteils zentral innerhalb des Tauchkolbens der Luftfeder, wohingegen die Kolbenstange den Luftraum der Luftfeder durchragt und sich mit ihrem Ende gegenüber dem Fahrzeugrahmen abstützt. Würde der Schwingungsdämpfer mit den Fahrwerksteilen einerseits und dem Fahrezugrahmen andererseits fest verbunden, käme es beim Einfedern zu einer Biegung und damit Verkantung des Schwingungsdämpfers. Um dies zu vermeiden, ist sowohl die Kolbenstange des Schwingungsdämpfers gelenkig gegenüber dem Fahrzeugrahmen, wie auch der Kolbenzylinder gelenkig gegenüber jenen Fahrzeugteilen, an denen er befestigt ist. Hierzu ist der Kolbenzylinder mittels eines Schwenklagers winkelbeweglich indem Tauchkolben angeordnet. Die so realisierte Gelenkigkeit des Kolbenzylinders darf allerdings nicht dazu führen, daß über das Gelenk, welches auf seiner einen Seite dem vollen Luftdruck der Luftfeder ausgesetzt ist, Luft aus der Luftfeder entweicht. Aus diesem Grunde weist das Gelenk mindestens einen zusätzlichen Dichtring auf, welcher das Luftvolumen in dem Federraum abdichtet. Die Abdichtung zwischen Schwingungsdämpfer und Luftfeder unterliegt, da sie im Fahrbetrieb die Schwenkbewegungen des Schwingungsdämpfers mitmachen muß, einem hohen Verschleiß, was einen häufigen Austausch des schwer zugänglichen Dichtringes erzwingt.

Der Erfindung liegt die **Aufgabe** zugrunde, eine gegenüber dem Stand der Technik verbesserte Feder-Dämpfereinheit zu schaffen.

Die **Lösung** dieser Aufgabe ist bei einer Feder-Dämpfereinheit mit den eingangs genannten Merkmalen dadurch gekennzeichnet, daß das Stützelement für das untere Ende des Rollbalgs starr in Bezug auf den Kolbenzylinder des Schwingungsdämpfers angeordnet ist, und daß sich das Gelenk innerhalb der Mantelfläche befindet, vorzugsweise auf etwa der halben Höhe derselben.

Bei der erfindungsgemäßen Feder-Dämpfereinheit findet in bezug auf den Längslenker ein Verschwenken nicht nur des Schwingungsdämpfers, sondern auch eines Teils der Luftfeder statt, und zwar jenes Stützelements, an dem der Rollbalg der Luftfeder längslenkerseitig druckdicht befestigt ist. Es besteht eine starre Verbindung zwischen dem Schwingungsdämpfer einerseits und dem Stützelement der Luftfeder andererseits, diese beiden Teile folgen daher gemeinsam jeder Ein- und Ausfederungsbewegung des Fahrzeuges. Wegen der starren Anordnung des Stützelements der Luftfeder in Bezug auf den Kolbenzylinder des Schwingungsdämpfers sind an die Abdichtung dieser beiden Teile zueinander nur geringe Anforderungen gestellt. Eine Abdichtung ist zwar erforderlich, um ein Entweichen der Druckluft aus der Luftfeder zu verhindern, jedoch handelt es sich um eine mechanisch nur gering beanspruchte und damit unkritische Abdichtung zwischen zwei zueinander unbeweglichen Teilen.

Von Vorteil ist ferner die geringe Baulänge der Feder-Dämpfereinheit, da sich das Gelenk, über welches der Schwingungsdämpfer schwenkbar an dem Längslenker gelagert ist, innerhalb der Mantelfläche und vorzugsweise auf etwa der halben Höhe der Mantelfläche befindet. Hierdurch werden außerdem etwaige Biegemomente auf den diesbezüglich empfindlichen Schwingungsdämpfer so gering wie möglich gehalten.

Mit einer Ausgestaltung wird vorgeschlagen, daß sich das längslenkerseitige Teil des Gelenks an einer Gabel befindet, die Bestandteil des Längslenkers ist, und daß der Kolbenzylinder schwenkbar zwischen den beiden Hälften der Gabel angeordnet ist. Durch die Gabel wird zunächst eine besonders gewichtssparende Bauweise ermöglicht, was deshalb von Bedeutung ist, da der Längslenker und damit auch die Gabel zu den ungefederten Massen des Fahrwerks zählen. Außerdem ermöglicht die Gabel, daß der Fahrtwind ungehindert an den zwischen den beiden Gabelhälften angeordneten Schwingungsdämpfer gelangt und auf diese Weise dessen Kolbenzylinder kühlt.

Vorzugsweise setzt sich die Gabel aus einem im wesentlichen horizontalen Gabelabschnitt, der eine Verlängerung des Längslenkers bildet, und einem hierzu rechtwinklig angeordneten Gabelende zusammen, an dem sich das längslenkerseitige Teil des Gelenks befindet.

Der Kolbenzylinder ist vorzugsweise im Bereich seines der Kolbenstange zugewandten Endes mit einer radialen Erweiterung dergestalt versehen, daß sie den Kolbenzylinder gegenüber Druck- und Zugkräften in der Luftfeder fixiert.

Mit einer weiteren Ausgestaltung wird vorgeschlagen, daß sowohl das Stützelement als auch die Mantelfläche starr in Bezug auf den Kolbenzylinder angeordnet sind. Vorzugsweise sind Stützelement und Mantelfläche Bestandteile eines nach unten zu dem Längslenker hin offenen Tauchkolbens der Luftfeder.

Mit einer weiteren bevorzugten Ausgestaltung der Feder-Dämpfereinheit wird vorgeschlagen, daß das Stützelement zumindest einen den Schwingungsdämpfer umgebenden Flansch aufweist, an dem das untere Ende des Rollbalgs druckdicht befestigt ist, und daß sich die Mantelfläche von dem Flansch zu dem Längslenker hin erstreckt.

Um etwaige Biegemomente auf den Schwingungsdämpfer so gering wie möglich zu halten, kann es außerdem von Vorteil sein, wenn die Drehachse des Gelenks die Längsachse des Schwingungsdämpfers im rechten Winkel kreuzt. Das Gelenk kann z. B. auch eine sphärische Kugelpfanne sein, wie sie aus Fig. 6 der DE 199 59 839 A1 bekannt ist.

Mit einer weiteren Ausgestaltung wird vorgeschlagen, daß sich der luftfederseitige Teil des Gelenks an einer den Kolbenzylinder umgebenden starren Manschette befindet, und daß an der Manschette sowohl der Kolbenzylinder als auch das Stützelement befestigt sind. Dies ermöglicht einen Aufbau mit nur wenigen Einzelteilen, da die Manschette eine Doppelfunktion übernimmt. An ihr sind sowohl der Schwingungsdämpfer, wie auch das Stützelement der Luftfeder befestigt.

Im Betrieb neigen Schwingungsdämpfer zu einer erheblichen Wärmeentwicklung. Um diese Wärme besser abzuführen, wird mit einer weiteren Ausgestaltung vorgeschlagen, daß der Kolbenzylinder an seinem der Kolbenstange abgewandten Ende soweit verlängert ist, daß der verlängerte Abschnitt des Kolbenzylinders aus der Luftfeder herausragt.

Wegen der erheblichen Federwege ist es von Vorteil, wenn die Kolbenstange eine zweistufige Teleskop-Kolbenstange ist.

Zur Erzielung einer geringen Bauhöhe der gesamten Feder-Dämpfereinheit wird schließlich vorgeschlagen, daß das obere Ende des Rollbalgs druckdicht an einem Deckel befestigt ist, der seinerseits an dem Fahrzeugrahmen befestigbar ist, und daß der Deckel mit einem in Richtung auf die Luftfeder topfartig vorspringenden Mittelteil versehen ist, an dessen Boden sich das Ende der Kolbenstange druckdicht abstützt.

Weitere Vorteile und Einzelheiten werden nachfolgend unter Bezugnahme auf die zugehörigen Zeichnungen erläutert. Darin zeigen:
- Fig. 1: in einer teilweise geschnittenen Seitenansicht ein mit einer erfindungsgemäßen Feder-Dämpfereinheit versehenes Fahrwerk, vorzugsweise das Fahrwerk eines Schwerlastanhängers oder -aufliegers;
- Fig. 1a: eine Einzelheit der Fig. 1 bei allerdings ausgezogenem Schwingungsdämpfer;
- Fig. 2: eine Ansicht des Fahrwerks von unten;
- Fig. 3: einen Schnitt durch das Fahrwerk gemäß der in Fig. 1 eingezeichneten Schnittebene 111 - III, wobei Teile der Luftfeder in Halbansicht dargestellt sind;
- Fig. 4: eine der Ansicht nach Fig. 3 ähnliche, vergrößerte Darstellung, jedoch bei einer anderen Ausführungsform.

In der Zeichnung ist mit dem Bezugszeichen 1 ein Fahrzeugrahmen eines LKW-Anhängers oder eines Sattelaufliegers für einen LKW bezeichnet. Unter dem Fahrzeugrahmen 1 ist eine Konsole 2 befestigt, die einen festen Anlenkpunkt 3 für einen um den Anlenkpunkt 3 verschwenkbaren Längslenker 4 bildet, der sich im wesentlichen in Fahrzeuglängsrichtung erstreckt. Auf jeder Seite des Fahrzeuges ist jeweils eine Konsole 2 mit einem daran verschwenkbar angeordneten Längslenker 4 vorgesehen. Die beiden Längslenker 4 sind mit einem die Räder lagernden Achsrohr 5 der Fahrzeugachse verbunden. Diese Verbindung erfolgt in an sich bekannter Weise über eine Achseinbindung mit Bügeln 6 sowie Achslappen 7a, 7b und 7c.

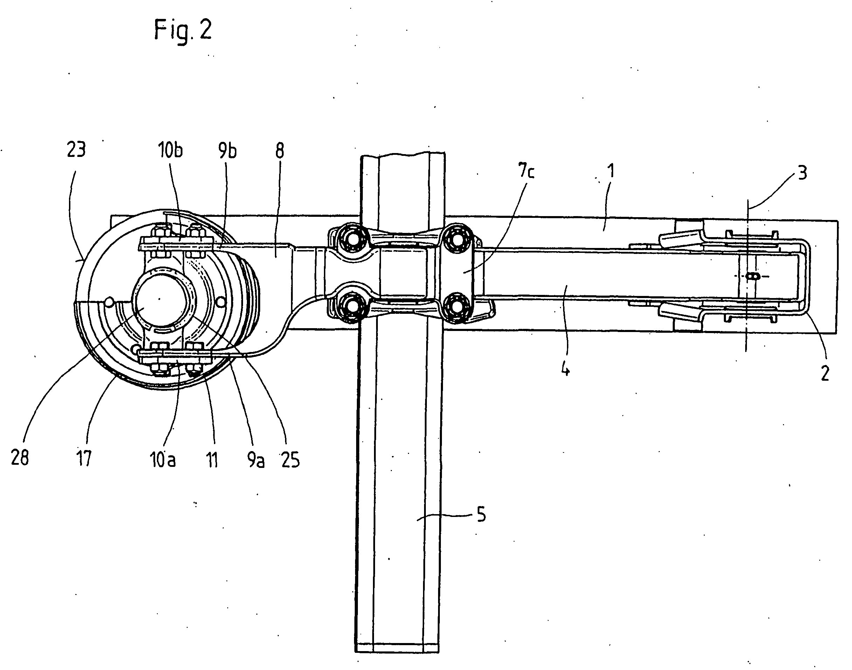

Funktionaler Bestandteil jedes Längslenkers 4 ist außerdem eine Lenkerverlängerung in Gestalt einer sich ebenso wie der Längslenker im wesentlichen horizontal erstreckenden Gabel 8. Hierzu läßt Fig. 2 erkennen, daß die Gabel 8 im Bereich der Achseinbindung noch unverzweigt ist, und sie sich erst in ihrem hinteren Bereich in die Gabelhälften 9a, 9b verzweigt. Die Befestigung der Gabel 8 an dem Längslenker 4 bzw. dem Achsrohr 5 erfolgt ebenfalls unter Ausnutzung der Achseinbindung aus den Bügeln 6 sowie den Achslappen 7a, 7b.

Bevorzugt wird die auf der Zeichnung dargestellte Ausführungsform, bei der ein unterer, von unten gegen den Längslenker 4 anliegender Achslappen, der hier als Federplatte 7c dient, einstückiger Bestandteil der Gabel 8 selbst ist.

Im Bereich der Verzweigung der Gabel 8 sind an den beiden Gabelhälften 9a, 9b zusätzliche Gabelenden 10a, 10b befestigt. Jedes der beiden Gabelenden 10a, 10b ist eine Platte, die sich nach oben und damit im wesentlichen rechtwinklig zur Ausrichtung der Gabel 8 erstreckt. Über Verschraubungen 11 sind die Gabelenden 10a, 10b mit den jeweiligen Gabelhälften 9a, 9b der Gabel 8 verbunden. Nahe ihres oberen Randes sind die Gabelenden 10a, 10b mit jeweils einer Bohrung zur Aufnahme der Drehachse eines Gelenks 12 versehen. Hierbei fluchten die Bohrungen beider Gabelenden 10a, 10b zueinander.

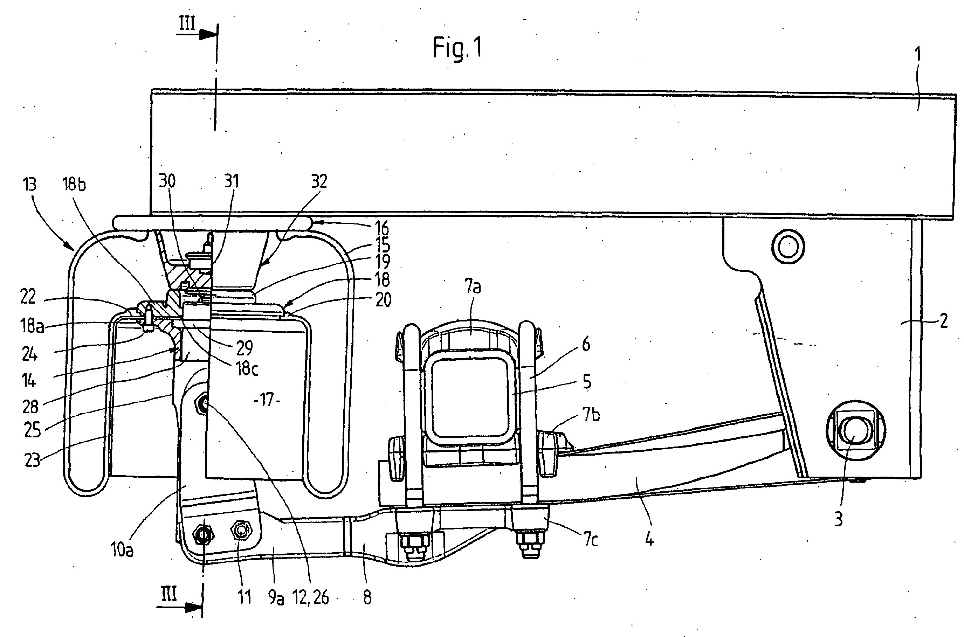

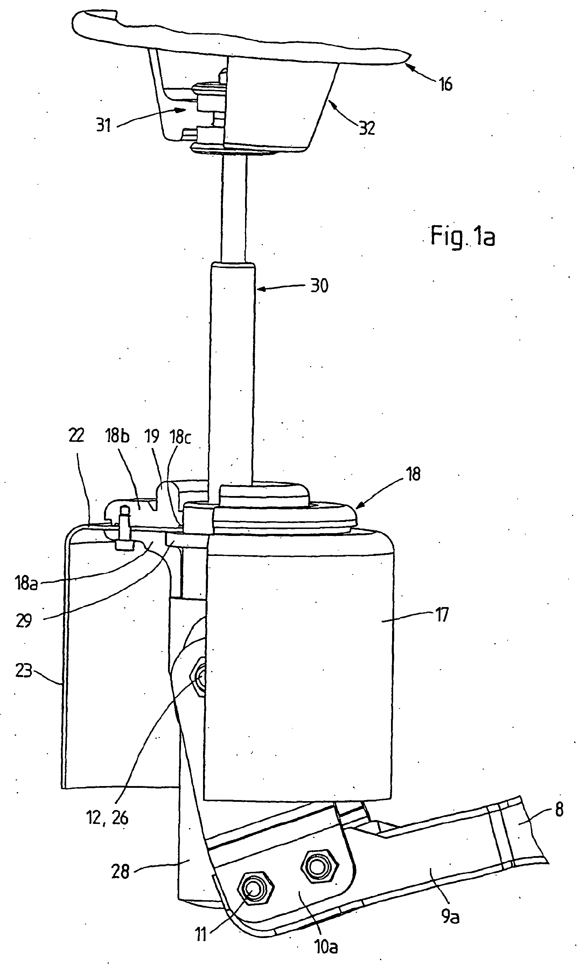

Bestandteil der in den Fig. 1 bis 3 dargestellten Achskonstruktion ist ferner eine Luftfeder 13 mit einem darin baulich integrierten Schwingungsdämpfer 14. Luftfeder 13 und Schwingungsdämpfer 14 stützen sich längslenkerseitig beide an dem Gelenk 12 an den Gabelenden 10a, 10b, und fahrzeugseitig von unten gegen den Fahrzeugrahmen 1 ab.

Die Luftfeder 13 besteht im wesentlichen aus einem walkfähigen Rollbalg 15, einem das obere Ende des Rollbalgs 15 an dem Fahrzeugrahmen 1 fixierenden Deckel 16, einem Tauchkolben 17 z. B. aus Kunststoff sowie einem flanschförmigen Stützelement 18, an dem der Rollbalg 15 mit seinem unteren Ende befestigt ist. Der Tauchkolben 17 dient in an sich bekannter Weise der Bereitstellung einer vorzugsweise zylindrischen Mantelfläche 23, an welcher sich der untere Teil des walkfähigen Rollbalgs 15 kontrolliert abrollen bzw. abwälzen kann. Fig. 1 zeigt die Luftfeder 13 in entlüftetem Zustand, d. h. der Luftdruck im Inneren des Rollbalgs 15 ist sehr gering oder nahezu null. In diesem Zustand arbeitet die Luftfeder 13 nicht, vielmehr stützt sich ein Druckring 19 des flanschförmigen Stützelements 18 von unten gegen einen Teil des Deckels 16 ab, die Luftfeder "sitzt auf. In diesem Zustand hat sich der Rollbalg 15 mit einem großen Teil seiner Länge auf der Mantelfläche 23 des Tauchkolbens aufgerollt.

Das Stützelement 18 übt eine dreifache Funktion aus. Zum einen ist an dem Stützelement, wie bereits beschrieben, der nach oben weisende Druckring 19 aus Gummi ausgebildet, auf dem sich bei entlüfteter Luftfeder der Deckel 16 und damit das Fahrzeuggewicht abstützt. Zum zweiten dient das Stützelement 18 der druckdichten Befestigung des unteren Endes des Rollbalgs 15. Hierzu besteht das Stützelement 18 bei dem dargestellten Ausführungsbeispiel aus einem unteren Flansch 18a und einem den Druckring 19 aufweisenden oberen Flansch 18b. Die beiden Flansche 18a, 18b bilden an ihrem Außenumfang eine Nut, in welcher das wulstförmige Ende 20 des Rollbalgs 15 druckdicht festgelegt ist. Zum dritten dient das Stützelement 18 der Befestigung des Tauchkolbens 17. Hierzu ist der oben liegende Boden 22 des Tauchkolbens 17 zwischen den beiden Flanschen 18a, 18b eingespannt. Von diesem Boden 22 aus erstreckt sich die vorzugsweise zylindrische Mantelfläche 23 des Tauchkolbens nach unten zu dem Längslenker hin. Verschraubungen 24 verbinden beide Flansche 18a, 18b miteinander und durchdringen zugleich den Boden 22 des Tauchkolbens.

In einer alternativen Ausgestaltung, welche auf der Zeichnung jedoch nicht dargestellt ist, können der Flansch 18a sowie der Tauchkolben 17 ein gemeinsames, einstückiges Bauteil sein. In dieses einstückige Bauteil kann auch eine nachfolgend noch beschriebene Manschette 25 einbezogen sein, die der gelenkigen Verbindung des Tauchkolbens bzw. des Stoßdämpfers mit dem Fahrzeug-Längslenker dient.

Wie die Zeichnung erkennen läßt, ist bei allen dargestellten Ausführungsbeispielen der untere Flansch 18a einstückiger Bestandteil der Manschette 25, deren Bestandteil wiederum zwei Gelenkzapfen 26 sind. Die Gelenkzapfen 26, welche um 180° einander gegenüberliegend an der im übrigen zylindrischen Manschette 25 angeformt sind, bilden die bereits erwähnte Drehachse des Gelenks 12. Diese Drehachse des Gelenks 12 erstreckt sich parallel zur Drehachse des Anlenkpunkts 3 des Längslenkers.

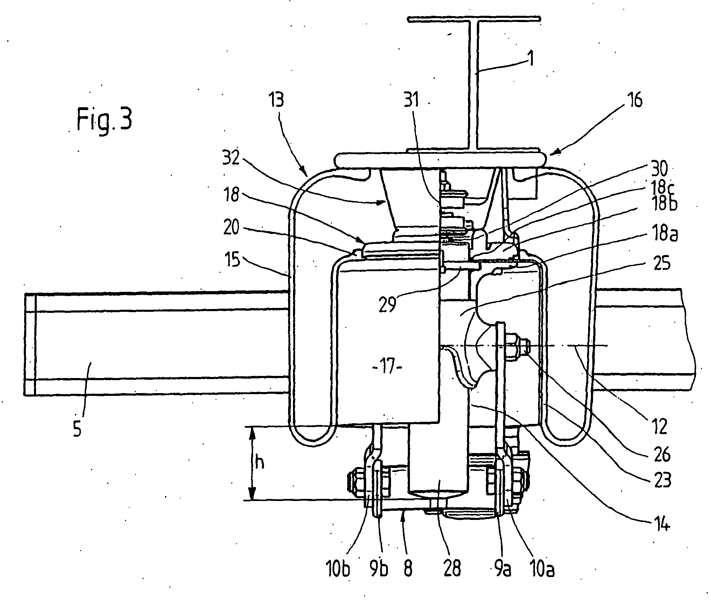

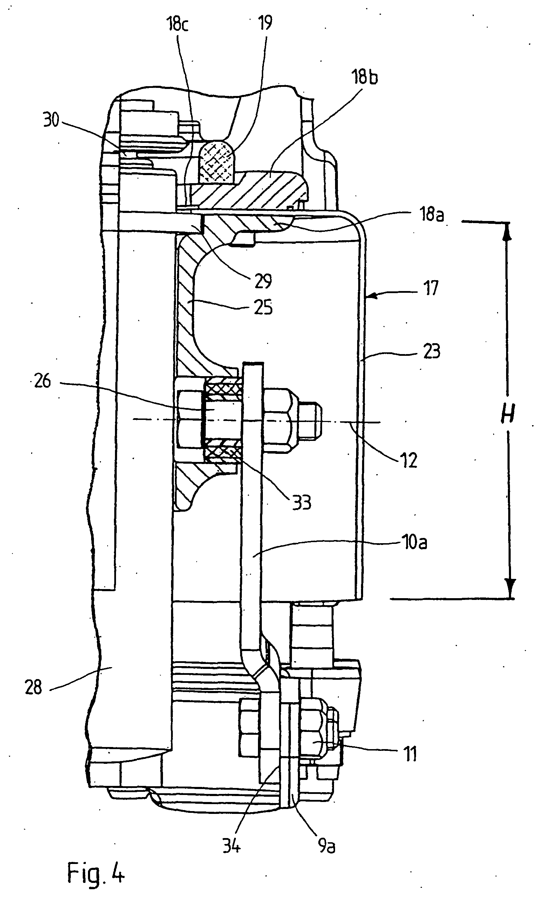

Einzelheiten in der Gestaltung des Gelenks einschließlich der Gelenkzapfen 26 sowie deren gelenkige Anbindung an die hochstehenden Gabelenden 10a, 10b lassen am besten die Fign. 3 und 4 erkennen. Ferner lassen Fig. 3 ebenso wie Fig. 4 erkennen, daß sich das Gelenk 12 in etwa auf der Hälfte der Höhe H der Mantelfläche 23 des Tauchkolbens 17 befindet.

Die Lage des Gelenks 12 innerhalb der Mantelfläche 23 des Tauchkolbens führt zu dem Vorteil, daß die durch die naturgemäße Reibung in dem Gelenk 12 bedingten Biegemomente auf den Schwingungsdämpfer so gering wie möglich ausfallen. Von Vorteil ist ferner die kompakte Bauweise mit geringer Baulänge, da ein beträchtlicher Teil des Kolbenzylinders 28 sich noch unterhalb des Gelenks 12 befindet, und er frei zwischen den beiden Gabelenden 10a, 10b schwenken kann.

Innerhalb der im wesentlichen zylindrischen Manschette 25 befindet sich der Kolbenzylinder 28 des Schwingungsdämpfers 14. Das zylindrische Gehäuse des Kolbenzylinders 28 ist allerdings so lang gestreckt, daß der Kolbenzylinder 28 mit einem Teil seiner Länge nicht nur nach unten aus der Manschette 25, sondern auch nach unten aus dem ihn konzentrisch umgebenden Tauchkolben 17 herausragt. In Fig. 3 ist jene Höhe h eingezeichnet, mit welcher der Kolbenzylinder 28 nach unten aus dem Tauchkolben 17 herausragt. Hierdurch wird dieser untereTeil des Kolbenzylinders 28 während der Fahrt einer Kühlluftanströmung ausgesetzt, und das in dem Kolbenzylinder enthaltene Dämpfungsöl gekühlt. Die beiden Gabelenden 10a, 10b stehen dieser Luftanströmung nicht im Wege, da sie sich, in Fahrtrichtung betrachtet, ausschließlich seitlich des Kolbenzylinders 28 befinden. Dies läßt Fig. 3 besonders anschaulich erkennen.

Die druckdichte Befestigung des Kolbenzylinders 28 erfolgt ebenfalls unter Ausnutzung des zweiteiligen Stützelementes 18. Hierzu stützt sich eine an dem Kolbenzylinder 18 zusätzlich angebrachte radiale Erweiterung 29 mit ihrer Unterseite an dem unteren Flansch 18a, und mit ihrer Oberseite an dem oberen Flansch 18b des Stützelementes 18 ab. Auf diese Weise ist der Kolbenzylinder 28 formschlüssig und starr mit dem Stützelement 18 und damit auch mit der Manschette 25 verbunden, ohne daß es im Bereich dieser Verbindung zu einem Entweichen von Druckluft aus der Luftfeder kommen kann. Dies verhindert u. a. die Dichtung 18c. Die Manschette 25 ist mit einer Durchgangsbohrung versehen, in welcher der Kolbenzylinder 28 sitzt, während sich dieser auf dem unteren Flansch 18a abstützt.

Der zweite Hauptbestandteil des Schwingungsdämpfers 14 ist die aus dem Kolbenzylinder 28 ausfahrbare Kolbenstange 30. Diese ist mit ihrem oberen Ende gelenkig an dem Deckel 16 der Luftfeder 13 befestigt. Diese Gelenkigkeit kann z. B. durch ein über gewisse Winkelgrade elastisches Gummielement erreicht werden, über welches sich das Ende der Kolbenstange 30 an dem Deckel 16 abstützt. Dieses elastische Gelenk 31 muß zugleich eine Abdichtfunktion übernehmen, um Luftverluste der Luftfeder an dieser Stelle zu vermeiden.

Auch das Gelenk 12 ist, wie die Ausführungsform gemäß Fig. erkennen läßt, in gewisser Weise elastisch ausgebildet. Zwischen der Aufnahme der Manschette 25 und dem Gelenkzapfen 26 befindet sich ein elastisches Element in Gestalt einer Gummibuchse 33. Durch diese Maßnahme kann die im Fahrbetrieb eintretende Verformung des aus den Längslenker und dem Achsrohr bestehenden Fahrwerkes ausgeglichen werden, ohne daß diese Verformung zu unzulässig hohen Querkräften auf den Stimmungsdämpfer 14 führt.

Fig. 4 läßt ferner erkennen, daß die Anschlußfläche 34 zwischen der Gabelhälfte 9a der Gabel und dem hiervon nach oben gerichteten Gabelende 10a auch anders liegen kann, als in Fig. 3 dargestellt. Während bei Fig. 3 der Anschlußbereich der Gabelhälfte 9a innen, und des Gabelendes 10a außen liegt, liegen die Verhältnisse bei der Ausführungsform nach Fig. 4 umgekehrt. Durch Wahl der Anschlußfläche 34, eventuell auch durch Wahl der Form und Verkröpfung der Gabelenden 10a, 10b kann daher eine Voreinstellung oder Anpassung der Teile quer zur Fahrzeuglängsrichtung vorgenommen werden, bevor schließlich die Verschraubung 11 eingesetzt und angezogen wird. Auf diese Weise läßt sich eine universelle Gabel 8 verwenden, bei der die spätere Anpassung über entsprechende Auswahl und Montage der zusätzlichen Gabelenden 10a, 10b erfolgt.

In bezug auf die Verbindung der Kolbenstange mit dem oberen Deckel der Luftfeder lassen die Fig. 1 und 3 erkennen, daß der im Bereich seines Außenumfanges unmittelbar an dem Fahrzeugrahmen 1 befestigte Deckel 16 ein nach unten in Richtung auf die Luftfeder topfartig vorspringendes Mittelteil 32 aufweist. Während das obere Ende des Rollbalgs 15 an dem weit oben liegenden Außenumfang des Deckels 16 druckdicht befestigt ist, ist das Ende der Kolbenstange am Boden des topfartig vorspringenden Mittelteils 32 gelenkig und druckdicht befestigt. Der Deckel 16 verfügt demgemäß über zwei unterschiedlich hohe Anschlußebenen, was eine in Höhenrichtung besonders kompakte Bauweise der Feder-Dämpfereinheit ermöglicht.

Die Kolbenstange 30 des Schwingungsdämpfers 14 ist vorzugsweise zweistufig in Art einer Teleskop-Kolbenstange gestaltet. Auf diese Weise können sehr große Auszugswege überbrückt werden. Bei eingeschobener Kolbenstange, welcher Fall auf der Zeichnung dargestellt ist, befinden sich beide Stufen der Teleskop-Kolbenstange weitgehend innerhalb des Kolbenzylinders 28. Durch geeignete Ventilanordnungen kann erreicht werden, daß bei Streckung des Schwingungsdämpfers zunächst nur ein Teil der zweiteiligen Teleskop-Kolbenstange ausfährt und daß umgekehrt bei einem Einschieben des Schwingungsdämpfers ebenfalls wieder zunächst nur das eine Teil eingefahren wird. Dies kann durch eine entsprechende Anpassung der Ventile und Dämpfungsöl-Oberströmquerschnitte in dem Schwingungsdämpfer erreicht werden.

### Bezugszeichenliste:

- 1: Fahrzeugrahmen
- 2: Konsole
- 3: Anlenkpunkt
- 4: Längslenker
- 5: Achsrohr
- 6: Federbügel
- 7a: Achslappen
- 7b: Achslappen
- 7c: Federplatte
- 8: Gabel
- 9a: Gabelhälfte
- 9b: Gabelhälfte
- 10a: Gabelende
- 10b: Gabelende
- 11: Verschraubung
- 12: Gelenk, Drehachse
- 13: Luftfeder
- 14: Schwingungsdämpfer
- 15: Rollbalg
- 16: Deckel
- 17: Tauchkolben
- 18: Stützelement
- 18a: unterer Flansch
- 18b: oberer Flansch
- 18c: Dichtung
- 19: Druckring
- 20: wulfsförmiges Ende
- 22: Boden
- 23: Mantelfläche
- 24: Verschraubung
- 25: Manschette
- 26: Gelenkzapfen
- 28: Kolbenzylinder
- 29: radiale Erweiterung
- 30: Kolbenstange
- 31: Gelenk
- 32: Mittelteil
- 33: Gummibuchse
- 34: Anschlußfläche
- h: Höhe
- H: Höhe der Mantelfläche

## Patentansprüche

1. Feder-Dämpfereinheit für luftgefederte Fahrzeugachsen mit einer sich einerseits gegenüber dem Fahrzeugrahmen (1) und andererseits gegenüber der Fahrzeugachse oder einem die Fahrzeugachse führenden Längslenker (4) abstützenden Rollbalg - Luftfeder (13), deren Rollbalg (15) längslenkerseitig druckdicht an einem Stützelement (18) befestigt ist, und mit einem auf der Längsachse der Luftfeder angeordneten Schwingungsdämpfer (14), der sich mit seiner Kolbenstange (30) gegenüber dem Fahrzeugrahmen (1), und mit seinem Kolbenzylinder (28) über ein Gelenk (12) gegenüber dem Längslenker (4) abstützt, wobei der Schwingungsdämpfer (14) das Stützelement (18) sowie eine Mantelfläche (23) durchragt, an der der Rollbalg (15) während des Ein- und Ausfedems abrollen kann,
**dadurch gekennzeichnet,**
**daß** das Stützelement (18) für das untere Ende des Rollbalgs (15) starr in Bezug auf den Kolbenzylinder (28) des Schwingungsdämpfers (14) angeordnet ist, und daß sich das Gelenk (12) innerhalb der Mantelfläche (23) befindet, vorzugsweise auf etwa der halben Höhe derselben.

2. Feder-Dämpfereinheit nach Anspruch 1, **dadurch gekennzeichnet, daß** sowohl das Stützelement (18) als auch die Mantelfläche (23) starr in Bezug auf den Kolbenzylinder (28) angeordnet sind.

3. Feder-Dämpfereinheit nach Anspruch 2, **dadurch gekennzeichnet, daß** Stützelement (18) und Mantelfläche (23) Bestandteile eines nach unten zu dem Längslenker hin offenen Topfes (Tauchkolbens) sind.

4. Feder-Dämpfereinheit nach einem der vorangehenden Ansprüche, **dadurch gekennzeichnet, daß** sich das längslenkerseitige Teil des Gelenks (12) an einer Gabel (8) befindet, die Bestandteil des Längslenkers (4) ist, und daß der Kolbenzylinder (28) schwenkbar zwischen den beiden Hälften der Gabel (8) angeordnet ist.

5. Feder-Dämpfereinheit nach Anspruch 4, **dadurch gekennzeichnet, daß** sich die Gabel (8) aus einem im wesentlichen horizontalen Gabelabschnitt, der eine Verlängerung des Längslenkers bildet und einem hierzu rechtwinklig angeordneten Gabelende (10a, 10b) zusammensetzt, an dem sich das längslenkerseitige Teil des Gelenks (12) befindet.

6. Feder-Dämpfereinheit nach einem der vorangehenden Ansprüche, **dadurch gekennzeichnet, daß** das Stützelement (18) zumindest einen den Schwingungsdämpfer (14) umgebenden Flansch (18a) aufweist, an dem das untere Ende des Rollbalgs (15) druckdicht befestigt ist, und daß sich die Mantelfläche (23) von dem Flansch (18a) zu dem Längslenker (4) hin erstreckt.

7. Feder-Dämpfereinheit nach einem der vorangehenden Ansprüche, **dadurch gekennzeichnet, daß** die Drehachse des Gelenks (12) die Längsachse des Schwingungsdämpfers (14) im rechten Winkel kreuzt.

8. Feder-Dämpfereinheit nach einem der vorangehenden Ansprüche, **dadurch gekennzeichnet, daß** sich der luftfederseitige Teil des Gelenks (12) an einer den Kolbenzylinder (28) umgebenden starren Manschette (25) befindet, und daß an der Manschette (25) sowohl der Kolbenzylinder (28) als auch das Stützelement (18) befestigt sind.

9. Feder-Dämpfereinheit nach einem der vorangehenden Ansprüche, **dadurch gekennzeichnet, daß** der Kolbenzylinder (28) im Bereich seines der Kolbenstange (30) zugewandten Endes mit einer radialen Erweiterung (29) dergestalt versehen ist, daß sie den Kolbenzylinder (28) gegenüber Druck-und Zugkräften in der Luftfeder fixiert.

10. Feder-Dämpfereinheit nach Anspruch 9, **dadurch gekennzeichnet, daß** der Kolbenzylinder (28) an seinem der Kolbenstange (30) abgewandten Ende soweit verlängert ist, daß der verlängerte Abschnitt des Kolbenzylinders (28) aus der Luftfeder (13) herausragt.

11. Feder-Dämpfereinheit nach einem der vorangehenden Ansprüche, **dadurch gekennzeichnet, daß** die Kolbenstange (30) eine zweistufige Teleskop-Kolbenstange ist.

12. Feder-Dämpfereinheit nach einem der vorangehenden Ansprüche, **dadurch gekennzeichnet, daß** das obere Ende des Rollbalgs (15) druckdicht an einem Deckel (16) befestigt ist, der seinerseits an dem Fahrzeugrahmen (1) befestigbar ist, und daß der Deckel (16) mit einem in Richtung auf die Luftfeder topfartig vorspringenden Mittelteil (32) versehen ist, an dessen Boden sich das Ende der Kolbenstange (30) druckdicht abstützt.

13. Feder-Dämpfereinheit nach einem der vorangehenden Ansprüche, **dadurch gekennzeichnet, daß** das Gelenk (12) mit einem elastischen Element versehen ist.

## Claims

1. Spring damper unit for air-sprung vehicle axles, comprising a U-type bellows air spring (13) which is supported at one side on the vehicle frame (1) and at the other side on the vehicle axle or on a trailing arm (4) which guides the vehicle axle, the U-type bellows (15) are fixed in a pressure-tight manner at the trailing arm side to a support element (18), and comprising a vibration damper (14) which is arranged on the longitudinal axis of the air spring and is supported by its piston rod (30) on the vehicle frame (1) and by its piston cylinder (28) on the trailing arm (4) via an articulation (12), wherein the vibration damper (14) protrudes through the support element (18) and also an outer surface (23) on which the U-type bellows (15) can run during compression and rebound, **characterized in that** the support element (18) for the lower end of the U-type bellows (15) is arranged rigidly with respect to the piston cylinder (28) of the vibration damper (14), and **in that** the articulation (12) is located within the outer surface (23), preferably at about half the height of the latter.

2. Spring damper unit according to Claim 1, **characterized in that** both the support element (18) and the outer surface (23) are arranged rigidly with respect to the piston cylinder (28).

3. Spring damper unit according to Claim 2, **characterized in that** the support element (18) and the outer surface (23) form part of a cup (plunger) which is open downwards towards the trailing arm.

4. Spring damper unit according to one of the preceding claims, **characterized in that** the trailing-arm-side part of the articulation (12) is located on a fork (8) which forms part of the trailing arm (4), and **in that** the piston cylinder (28) is arranged in a pivotable manner between the two halves of the fork (8).

5. Spring damper unit according to Claim 4, **characterized in that** the fork (8) is composed of an essentially horizontal fork section which forms an extension of the trailing arm and of a fork end (10a, 10b) arranged at right angles thereto, on which the trailing-arm-side part of the articulation (12) is located.

6. Spring damper unit according to one of the preceding claims, **characterized in that** the support element (18) has at least one flange (18a) which surrounds the vibration damper (14), to which flange the lower end of the U-type bellows (15) is fixed in a pressure-tight manner, and **in that** the outer surface (23) extends from the flange (18a) to the trailing arm (4).

7. Spring damper unit according to one of the preceding claims, **characterized in that** the axis of rotation of the articulation (12) intersects the longitudinal axis of the vibration damper (14) at right angles.

8. Spring damper unit according to one of the preceding claims, **characterized in that** the air-spring-side part of the articulation (12) is located on a rigid sleeve (25) which surrounds the piston cylinder (28), and **in that** both the piston cylinder (28) and the support element (18) are fixed to the sleeve (25).

9. Spring damper unit according to one of the preceding claims, **characterized in that** the piston cylinder (28) is provided with a radial widening (29) in the region of its end facing towards the piston rod (30), in such a way that it fixes the piston cylinder (28) against pressure and tensile forces in the air spring.

10. Spring damper unit according to Claim 9, **characterized in that** the piston cylinder (28) is extended at its end facing away from the piston rod (30) to such an extent that the extended section of the piston cylinder (28) protrudes out of the air spring (13).

11. Spring damper unit according to one of the preceding claims, **characterized in that** the piston rod (30) is a two-stage telescopic piston rod.

12. Spring damper unit according to one of the preceding claims, **characterized in that** the upper end of the U-type bellows (15) is fixed in a pressure-tight manner to a cover (16) which in turn can be fixed to the vehicle frame (1), and **in that** the cover (16) is provided with a central part (32) which projects in a cup-like manner in the direction of the air spring, on the base of which central part the end of the piston rod (30) is supported in a pressure-tight manner.

13. Spring damper unit according to one of the preceding claims, **characterized in that** the articulation (12) is provided with an elastic element.

## Revendications

1. Amortisseur à ressort pour des essieux de véhicule à suspension pneumatique, comportant un amortisseur pneumatique (13) à soufflet roulant, qui prend appui, d'une part, sur le châssis du véhicule (1) et, d'autre part, sur l'essieu du véhicule ou un bras longitudinal (4) guidant ledit essieu et dont le soufflet roulant (15) est fixé, du côté du bras longitudinal, de manière étanche à la pression contre un élément de support (18), et comportant un amortisseur de vibrations (14), agencé sur l'axe longitudinal de l'amortisseur pneumatique et qui prend appui avec sa tige de piston (30) sur le châssis du véhicule (1) et avec son cylindre à piston (28) sur le bras longitudinal (4) par l'intermédiaire d'une articulation (12), ledit amortisseur de vibrations (14) traversant l'élément de support (18), ainsi qu'une paroi latérale (23), sur laquelle le soufflet roulant (15) peut se dérouler pendant le débattement du ressort, **caractérisé en ce que** l'élément de support (18) pour l'extrémité inférieure du soufflet roulant (15) est agencée de manière fixe par rapport au cylindre à piston (28) de l'amortisseur de vibrations (14) et **en ce que** l'articulation (12) se situe à l'intérieur de la paroi latérale (23), de préférence à peu près à mi-hauteur de celle-ci.

2. Amortisseur à ressort selon la revendication 1, **caractérisé en ce que** l'élément de support (18), de même que la paroi latérale (23) sont agencés fixes par rapport au cylindre à piston (28).

3. Amortisseur à ressort selon la revendication 2, **caractérisé en ce que** l'élément de support (18) et la paroi latérale (23) font partie intégrante d'un pot (piston plongeur) ouvert vers le bas vers le bras longitudinal.

4. Amortisseur à ressort selon l'une quelconque des revendications précédentes, **caractérisé en ce que** la partie de l'articulation (12), du côté du bras longitudinal, est disposée sur une fourche (8), qui fait partie intégrante du bras longitudinal (4), et **en ce que** le cylindre à piston (28) est monté pivotant entre les deux moitiés de la fourche (8).

5. Amortisseur à ressort selon la revendication 4, **caractérisé en ce que** la fourche (8) est formée par une partie de fourche sensiblement horizontale, qui constitue un prolongement du bras longitudinal, et par une extrémité de fourche (10a, 10b), qui est agencée perpendiculairement à ladite partie et sur laquelle est disposée la partie de l'articulation (12), du côté du bras longitudinal.

6. Amortisseur à ressort selon l'une quelconque des revendications précédentes, **caractérisé en ce que** l'élément de support (18) comporte au moins une bride (18a), qui entoure l'amortisseur de vibrations (14) et qui est fixée de manière étanche à la pression contre l'extrémité inférieure du soufflet roulant (15), et **en ce que** la paroi latérale (23) s'étend depuis la bride (18a) vers le bras longitudinal (4).

7. Amortisseur à ressort selon l'une quelconque des revendications précédentes, **caractérisé en ce que** l'axe de rotation de l'articulation (12) croise à angle droit l'axe longitudinal de l'amortisseur de vibrations (14).

8. Amortisseur à ressort selon l'une quelconque des revendications précédentes, **caractérisé en ce que** la partie de l'articulation (12), du côté de l'amortisseur pneumatique, est disposée sur une manchette (25) rigide, entourant le cylindre à piston (28), et **en ce que** le cylindre à piston (28), de même que l'élément de support (18) sont fixés sur la manchette (25).

9. Amortisseur à ressort selon l'une quelconque des revendications précédentes, **caractérisé en ce que** le cylindre à piston (28), dans la zone de son extrémité orientée vers la tige de piston (30), comporte un élargissement radial (29), de telle sorte que celui-ci fixe le cylindre à piston (28) par rapport à des forces de pression et de traction dans l'amortisseur pneumatique.

10. Amortisseur à ressort selon la revendication 9, **caractérisé en ce que** le cylindre à piston (28), sur son extrémité opposée à la tige de piston (30), est prolongé de telle sorte que le tronçon prolongé du cylindre à piston (28) s'avance en saillie hors de l'amortisseur pneumatique (13).

11. Amortisseur à ressort selon l'une quelconque des revendications précédentes, **caractérisé en ce que** la tige de piston (30) est une tige télescopique de piston à deux niveaux.

12. Amortisseur à ressort selon l'une quelconque des revendications précédentes, **caractérisé en ce que** l'extrémité supérieure du soufflet roulant (15) est fixée de manière étanche à la pression contre un couvercle (16), qui peut être fixé lui-même contre le châssis du véhicule (1) et **en ce que** le couvercle (16) est muni d'une partie centrale (32), qui s'avance en saillie en forme de godet vers l'amortisseur pneumatique et sur le fond de laquelle l'extrémité de la tige de piston (30) est en appui de manière étanche à la pression.

13. Amortisseur à ressort selon l'une quelconque des revendications précédentes, **caractérisé en ce que** l'articulation (12) est munie d'un élément élastique.
